# EUROPÄISCHE PATENTANMELDUNG

(11) **EP 1 419 838 A1**
(43) Veröffentlichungstag der Anmeldung: **19.05.2004**
(21) Anmeldenummer: 03023094.0
(22) Anmeldetag: 15.10.2003
(51) Int. Cl.: B23B 31/167

(54) **Spannfutter**

(30) Priorität: 18.11.2002 DE 20217788 U
(71) Anmelder: Röhm GmbH, 89567 Sontheim (DE)
(72) Erfinder: Taglang, Johann, 86441 Medlingen (DE); Papenfuss, Jens, 89567 Sontheim (DE)
(74) Vertreter: Hentrich, Swen Dipl.-Phys. Dr.

(57) **Zusammenfassung**

Die Erfindung betrifft ein Spannfutter für Werkzeugmaschinen, mit einem an der Maschinenspindel anschließbaren Futterflansch (2), mit einem Futterkörper (3), mit mehreren in radialen Führungsnuten (4) des Futterkörpers (3) angeordneten Grundbacken (5), an denen durch Befestigungsmittel (6) Aufsatzbacken (7) befestigt sind, mit einem in einer Kolbenkammer (8) angeordneten, durch ein Druckmittel beaufschlagbaren und der Verstellung der Grundbacken (5) dienenden Spannkolben (9), und mit einer an dem Futterflansch (2) angeschlossenen, an dem freien Ende des Futterkörpers (3) angeordneten Futterplatte (15), die die Befestigungsmittel (6) radial überdeckt. Der Futterkörper (3) ist gegen die Kraft mindestens einer Feder (19) an dem Futterflansch (2) abgestützt und axial verstellbar gegenüber dem Futterflansch (2) gelagert.

## Beschreibung

Die Erfindung betrifft ein Spannfutter für Werkzeugmaschinen, insbesondere Drehmaschinen, mit einem an der Maschinenspindel anschließbaren Futterflansch, mit einem Futterkörper, mit mehreren in radialen Führungsnuten des Futterkörpers angeordneten Grundbacken, an denen durch Befestigungsmittel Aufsatzbacken befestigt sind, mit einem an einer Kolbenkammer angeordneten, durch ein Druckmittel beaufschlagbaren und der Verstellung der Grundbacken dienenden Spannkolben, und mit einer an dem Futterflansch angeschlossenen, an dem freien Ende des Futterkörpers angeordneten Futterplatte, die radial die Befestigungsmittel überdeckt.

Derartige Spannfutter sind aus der Praxis bekannt, bei denen die Futterplatte dazu dient, neben der durch die aus Grundbacken und Aufsatzbacken gebildeten Spannbacken vermittelte radiale Festlegung des zu spannenden Werkstückes oder Werkzeuges auch dessen axiale Lage genau zu definieren. Mit der Präsenz der Futterplatte ist der Nachteil verbunden, daß die Befestigungsmittel der Aufsatzbacken nicht mehr frei zugänglich sind, so daß im Arbeitsalltag des Spannfutters häufig eine Demontage der Futterplatte erforderlich ist. Die axiale Lage des zu spannenden Werkstückes oder Werkzeugs ist zudem lediglich durch die Genauigkeit bestimmt, mit der der Nutzer oder eine Wechselvorrichtung das Werkstück oder das Werkzeug zum Spannen durch die Spannbacken bereit stellt.

Der Erfindung liegt daher die Aufgabe zugrunde, ein Spannfutter der eingangs genannten Art so auszubilden, daß mit guter Reproduzierbarkeit eine genau definierte axiale Lage für das zu spannende Werkstück erzielt wird.

Diese Aufgabe wird nach der Erfindung bei einem Spannfutter der eingangs genannten Art dadurch gelöst, daß der Futterkörper gegen die Kraft mindestens einer Feder an dem Futterflansch abgestützt und axial verstellbar gegenüber dem Futterflansch gelagert ist.

Mit einer derartigen Gestaltung ist der Vorteil verbunden, daß während des Spannvorganges eine Niederzugskraft erzeugt wird, sobald die durch den Spannkolben erbrachte Spannkraft die Federkraft der zwischen dem Futterkörper und dem Futterflansch angeordneten Feder übersteigt, so daß im Ergebnis der Futterkörper axial verstellt und gegen den Futterflansch gepresst wird. Bei der axialen Verstellung des Futterkörpers werden auch die in den Führungsnuten angeordneten Grundbacken mitgenommen, so daß mit hoher Kraft das Werkstück oder das Werkzeug gegen die Futterplatte gepresst wird, also ein Niederzugeffekt eintritt, der bereits schon bei einem geringen axialen Weg in der Größenordnung von wenigen zehntel Millimetern wirksam wird.

Nach einer ganz besonders bevorzugten Ausführungsform ist weiterhin vorgesehen, daß im Futterkörper in Keilstangentaschen quer zu den Führungsnuten verschiebbare Keilstangen angeordnet sind, die zur Bildung einer Schrägverzahnung mit Zahnreihen in entsprechende Zahnlücken der Grundbacken in Eingriff zu bringen und mit dem Spannkolben gekoppelt sind. Eine derartige Kopplung der Grundbacken mit dem Spannkolben hat sich in der Praxis vielfach bewährt und ermöglicht insbesondere auch einen einfachen Backenwechsel, indem jede Keilstange durch einen in eine im Futterkörper ausgebildete Schlüsselaufnahme einzusetzenden Schlüssel in eine dem Wechsel der Grundbacke dienende Stellung verstellbar ist, in der die Zahnreihen aus dem Bereich der zugeordneten Führungsnut verschoben sind.

Um eine exakte Verstellung des Futterkörpers in axialer Richtung zu ermöglichen, ist das Spannfutter derart gestaltet, daß die Futterplatte an Führungssäulen angeschlossen ist, die mit dem Futterflansch verbunden sind und in Führungsaufnahmen den Futterkörper durchgreifen.

Eine nochmals verbesserte Führung des Futterkörpers wird erreicht, indem dem Futterflansch Führungsstifte zugeordnet sind, die in Führungsbohrungen des Futterkörpers eingreifen.

Um die Niederzugskraft an das konkret vorliegende Spannproblem anpassen zu können, ist ein Verstellmittel zur Einstellung der Niederzugskraft über die Feder vorgesehen.

Bevorzugt ist dabei, wenn das Verstellmittel durch eine in dem Futterkörper angeordnete Verstellschraube zur Kompression der Feder gebildet ist.

Im folgenden wir die Erfidung an einem in der Zeichnung dargestellten Ausführungsbeispiel näher erläutert; es zeigen:

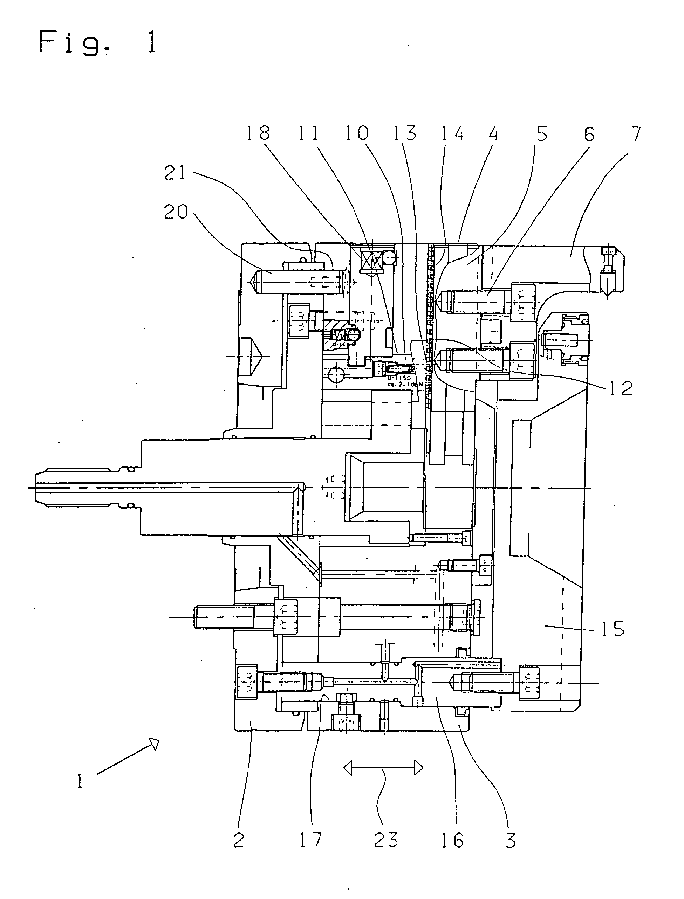

- Fig. 1: einen Längsschnitt durch ein erfindungsgemäßes Spannfutter in einer eine Führungsnut enthaltenden Ebene, und

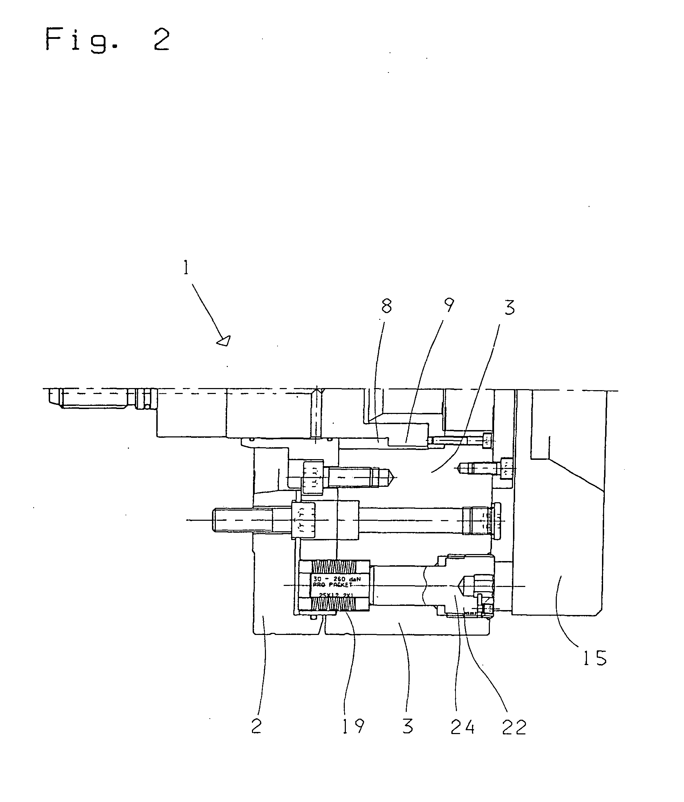

- Fig. 2: die untere Hälfte eines Längsschnitts durch das Spannfutter aus Figur 1 in einer die Feder enthaltenden Ebene zwischen den Führungsnuten.

In der Zeichnung dargestellt ist ein Spannfutter 1, wie dieses an Werkzeugmaschinen, insbesondere Drehmaschinen, Verwendung findet. Das Spannfutter 1 besteht aus einem an der Maschinenspindel anschließbaren Futterflansch 2 und einem Futterkörper 3, in dem mehrere, üblicherweise drei, radiale Führungsnuten 4 ausgebildet sind zur Aufnahme und Führung von Grundbacken 5, an denen durch Befestigungsmittel 6, in dem gezeigten Ausführungsbeispiel Schraubverbindungen, Aufsatzbacken 7 befestigt sind. Das Spannfutter 1 weist weiterhin einen in einer Kolbenkammer 8 angeordneten, durch ein Druckmittel beaufschlagbaren Spannkolben 9 auf, der der Verstellung der Grundbacken 5 dient, mit denen der Spannkolben 9 über Keilstangen 10 gekoppelt ist, die im Futterkörper 3 in Keilstangentaschen 11 quer zu den Führungsnuten 4 verschiebbar angeordnet sind. Die Keilstangen 10 greifen zur Bildung einer Schrägverzahnung 12 mit Zahnreihen 13 in entsprechende Zahnlücken 14 der Grundbacken 5 und ermöglichen so aufgrund der Schrägverzahnung 12 die radiale Verstellung der Grundbacken 5.

An dem freien Ende des Futterkörpers 3 ist eine Futterplatte 15 angeordnet, die an Führungssäulen 16 angeschlossen und mit dem Futterflansch 2 starr verbunden ist, wozu die Führungssäulen 16 den Futterkörper 3 in Führungsaufnahmen 17 durchgreifen. Die Futterplatte 15 überdeckt radial die Befestigungsmittel 6 für die Aufsatzbacken 7 und verhindert so deren einfachen Wechsel, der indirekt ermöglicht ist, da jede Keilstange 10 durch einen in eine im Futterkörper 3 ausgebildete Schlüsselaufnahme 18 einzusetzenden Schlüssel in eine dem Wechsel der Grundbacken 5 dienende Stellung verstellbar ist, in der die Zahnreihen 13 aus dem Bereich der zugeordneten Führungsnut 4 verschoben sind, so daß ein Wechsel der Grundbacken 5, der an den Grundbacken 5 befestigten Aufsatzbacken 7 beziehungsweise die radiale Einstellung der Grundbacken 5 in einfacher Weise möglich ist.

Eine weitere Besonderheit des Spannfutters 1 ist, daß der Futterkörper 3 gegen die Kraft mindestens einer Feder 19 an dem Futterflansch 2 abgestützt und axial verstellbar gegenüber dem Futterflansch 2 gelagert ist. Für die präzise Führung des Futterkörpers 3 relativ zu dem Futterflansch 2 werden die Führungssäulen 16 genutzt, wobei zusätzlich dem Futterflansch 2 zugeordnete Führungsstifte 20 verwendet werden, die in Führungsbohrungen 21 des Futterkörpers 3 eingreifen. Zweckmäßiger werden drei Federn 19 verwendet, die zwischen jeweils zwei benachbarten Führungsnuten 4 angeordnet sind. Ein Verstellmittel 22, nämlich eine Stellschraube 24, ist zur Einstellung der Federvorspannung vorgesehen.

Durch die axiale Verstellbarkeit des Futterkörpers 3 ergibt sich beim Spannen eines Werkstückes oder eines Werkzeuges ein Niederzugseffekt, da in dem Moment während des Spannvorganges, in dem die durch den Spannkolben 9 aufgebrachte Kraft die Federkraft übersteigt, die Verschiebung gegenüber dem Futterflansch 2 durch die Feder 19 nicht mehr aufrechterhalten werden kann, so daß der Futterkörper 3 sich axial auf den Futterflansch 2 zubewegt, bis der Futterkörper 3 an dem Futterflansch 2 zur Anlage kommt. Bei der axialen Verstellung des Futterkörpers 3 werden auch die in den Führungsnuten 4 eingesetzten Grundbacken 5 und damit die Aufsatzbacken 7 mitgenommen mit dem zwischen diesen gespannten Werkstück. Die durch den Pfeil 23 angedeutete axiale Verstellbarkeit des Futterkörpers 3 ist in dem gezeigten Ausführungsbeispiel übertrieben wiedergegeben und beträgt in der Praxis lediglich wenige zehntel Millimeter, die aber ausreichen, um das Werkstück definiert gegen die Futterplatte 15 zu pressen.

## Patentansprüche

1. Spannfutter für Werkzeugmaschinen, insbesondere Drehmaschinen, mit einem an der Maschinenspindel anschließbaren Futterflansch (2), mit einem Futterkörper (3), mit mehreren in radialen Führungsnuten (4) des Futterkörpers (3) angeordneten Grundbacken (5), an denen durch Befestigungsmittel (6) Aufsatzbacken (7) befestigt sind, mit einem in einer Kolbenkammer (8) angeordneten, durch ein Druckmittel beaufschlagbaren und der Verstellung der Grundbacken (5) dienenden Spannkolben (9), und mit einer an dem Futterflansch (2) angeschlossenen, an dem freien Ende des Futterkörpers (3) angeordneten Futterplatte (15), die radial die Befestigungsmittel (6) überdeckt, **dadurch gekennzeichnet, daß** der Futterkörper (3) gegen die Kraft mindestens einer Feder (19) an dem Futterflansch (2) abgestützt und axial verstellbar gegenüber dem Futterflansch (2) gelagert ist.

2. Spannfutter nach Anspruch 1, **dadurch gekennzeichnet, daß** im Futterkörper (3) in Keilstangentaschen (11) quer zu den Führungsnuten (4) verschiebbare Keilstangen (10) angeordnet sind, die zur Bildung einer Schrägverzahnung (12) mit Zahnreihen (13) in entsprechende Zahnlücken (14) der Grundbacken (5) in Eingriff zu bringen und mit dem Spannkolben (9) gekoppelt sind.

3. Spannfutter nach Anspruch 1 oder 2, **dadurch gekennzeichnet, daß** jede Keilstange (10) durch einen in eine im Futterkörper (3) ausgebildete Schlüsselaufnahme (18) einzusetzenden Schlüssel in eine dem Wechsel der Grundbacken (5) dienende Stellung verstellbar ist, in der die Zahnreihen (13) aus dem Bereich der zugeordneten Führungsnut (4) verschoben sind.

4. Spannfutter nach einem der Ansprüche 1 bis 3, **dadurch gekennzeichnet, daß** die Futterplatte (15) an Führungssäulen (16) angeschlossen ist, die mit dem Futterflansch (2) verbunden sind und in Führungsaufnahmen (17) den Futterkörper (3) durchgreifen.

5. Spannfutter nach einem der Ansprüche 1 bis 4, **dadurch gekennzeichnet, daß** dem Futterflansch (2) Führungsstifte (20) zugeordnet sind, die in Führungsbohrungen (21) des Futterkörpers (3) eingreifen.

6. Spannfutter nach einem der Ansprüche 1 bis 5, **dadurch gekennzeichnet, daß** ein Verstellmittel (22) zur Einstellung der Niederzugskraft über die Feder (19) vorgesehen ist.

7. Spannfutter nach Anspruch 6, **dadurch gekennzeichnet, daß** das Verstellmittel (22) durch eine in dem Futterkörper (3) angeordnete Stellschraube (23) zur Kompression der Feder (19) gebildet ist.
